# EUROPEAN PATENT SPECIFICATION

(11) **EP 2 173 047 B1**
(45) Date of publication and mention of the grant of the patent: **24.02.2016**
(21) Application number: 07845741.3
(22) Date of filing: 29.11.2007
(51) Int. Cl.: H04W 4/08, H04W 4/16, H04W 8/18

(54) **A METHOD FOR PROCESSING GROUP-BUSY IN FLEXIBLE ALERTING IN SINGLE USER TYPE**
VERFAHREN ZUR VERARBEITUNG VON GRUPPEN-BELEGT BEIM FLEXIBLEN RUFEN IM EINZELBENUTZERTYP
PROCÉDÉ POUR TRAITER UN GROUPE OCCUPÉ DANS UN SYSTÈME D'ALERTE FLEXIBLE À UN SEUL TYPE D'UTILISATEUR

(30) Priority: 24.07.2007 CN 200710136360
(43) Date of publication of application: 07.04.2010
(73) Proprietor: ZTE Corporation, Shenzhen, Guangdong 518057 (CN)
(72) Inventor: ZHANG, Qiang, Shenzhen, Guangdong 518057 (CN)
(74) Representative: V.O.
(86) International application number: PCT/CN2007/003376
(87) International publication number: WO 2009/012626

(56) References cited:
- CN-A- 1 543 110
- US-A1- 2004 180 654
- US-A1- 2007 041 533
- US-A1- 2007 135 123
- Lee Valerius ET AL: "MMD Supplementary Services Stage 2 - Replacement Flow for the Flexible Alerting Feature", , 29 March 2007 (2007-03-29), pages 1-4, XP055098020, ftp://ftp.3gpp2.org/TSGX/Working/2007/TSG- X-2007-03-Atlanta/TSGX-2007-03-Atlanta/WG3 -MMD/ Retrieved from the Internet: URL:http://ftp.3gpp2.org/TSGX/Working/2007 /TSG-X-2007-03-Atlanta/TSGX-2007-03-Atlant a/WG3-MMD/X30-20070326-023r1%20Suppl%20Svc s%20Flex%20Alerting%20%5BNT%5D.doc [retrieved on 2014-01-23]
- "MMD Supplementary Services", , 18 June 2007 (2007-06-18), pages 1-52, XP055097889, Retrieved from the Internet: URL:ftp://ftp.3gpp2.org/TSGX/Working/2007/ TSG-X-2007-06-Kunming/TSG-X-2007-06-Kunmin g/WG3-MMD/X30-20070618-006%20Supp%20servic e%20baseline%5BQualcomm%5D.zip [retrieved on 2014-01-22]
- Zte: "FA group Busy for single user and multiple users", , 25 July 2007 (2007-07-25), pages 1-6, XP055097862, Retrieved from the Internet: URL:http://ftp.3gpp2.org/TSGX/Working/2007 /TSG-X-2007-07-Calgary/TSG-X-2007-07-Calga ry/WG3-MMD/X30-20070723-038r2%20FA%20group %20Busy%20%20for%20single%20user%20and%20m ultiple%20user%5BZTE-RITT%5D.doc [retrieved on 2014-01-22]

## Description

### Invention Field

The present invention relates to communication field, in particular to a method for processing busyness of flexible alert (FA) group with single-user type in an IP multimedia subsystem.

### Invention Background

FA is a service for prompting a user group which has a guiding number and one or more member numbers. When the guiding number is dialed, the calling will be connected to each member and all the members receive alert simultaneously. When one member hooks off and answers the phone, a session will be established between the caller and the member, the rest of the calling branches will be released.

FA can be classified into two types, namely, single-user type and multi-user type. In a single-user type FA, when one member is busy, the FA group is busy, while in a multi-user type FA, the FA group is busy only when all the members are busy.

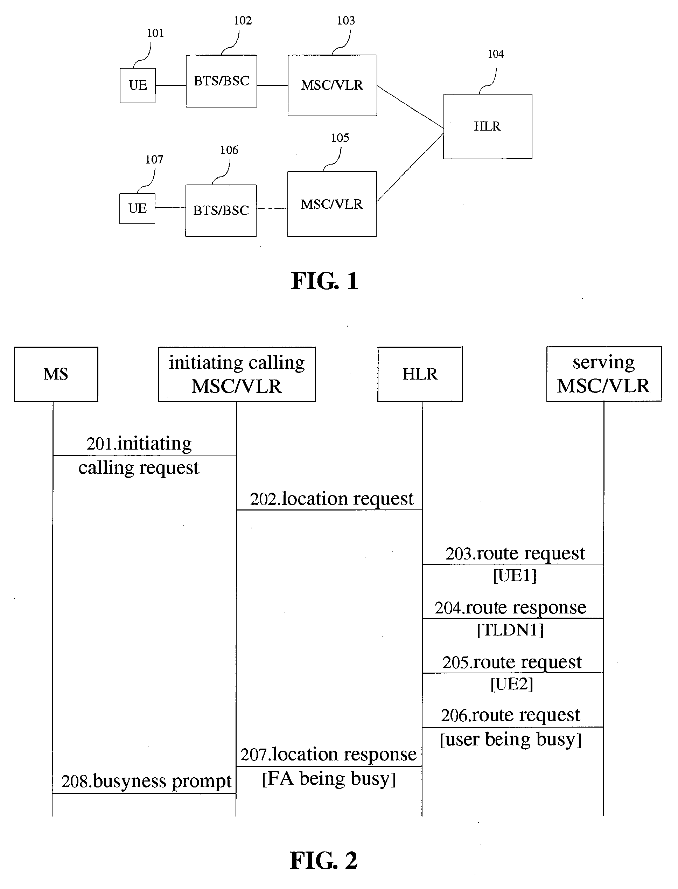

In prior art, whether a FA group is busy or not is determined by the home location register (HLR), the network architecture of which is shown in Fig.1. As shown in Fig.1, the user equipments (UE) (101, 107) are user terminals representing the caller or one member of FA. BTS/BSC (102, 106) are base station and base station controller, MSC/VLR (103, 105) are mobile switched center/visited location register, and HLR (104) is a home location register.

Fig.2 shows a processing flow of the busyness of flexible alert (FA) group with single-user type in prior art. As shown in Fig.2, HLR sends route requests to the serving MSC of each member of FA (203/205) when receiving a location request from the calling MSC (202). If the user is idle, the serving MSC returns a temporary location digit number (TLDN) (204). If the user is busy, the serving MSC returns that the user is busy (206). At last, if the FA is single-user type, the HLR returns that the user is busy to the calling MSC.

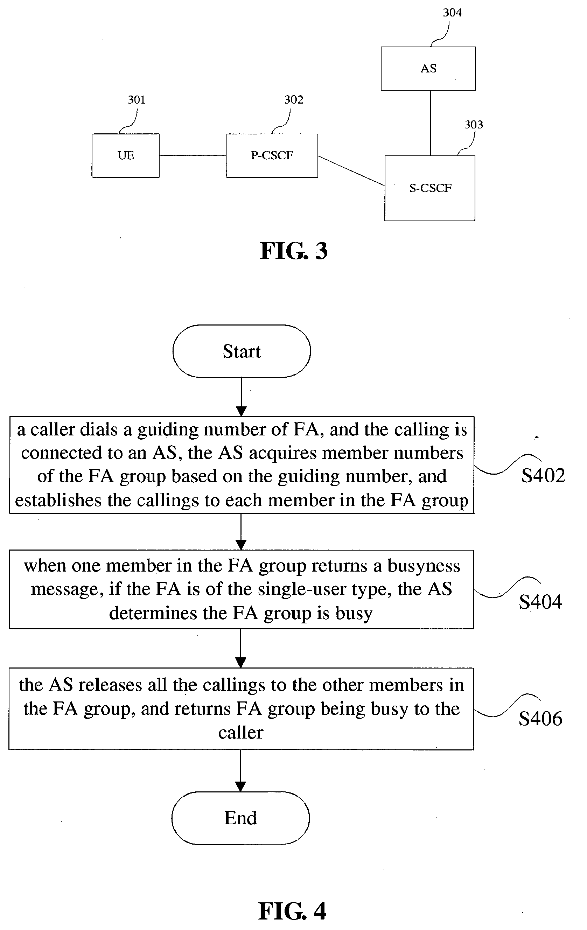

Based on demand, FA needs to be implemented in a IP media sub-system (IMS). The network structure of IMS is shown in Fig.3. The UE (301) represents a user equipment involving a calling, which can be a calling equipment or a called equipment. P-CSCF (302) represents proxy-call session control function, it is the session entrance point where a UE is accessed to the IMS network, and is responsible for forwarding the session between a UE and the network. S-CSCF (303) represents serving-call session control function; it is responsible for handling the session request from a UE and performing the initial filtering rule. AS (304) is an application server and responsible for providing service of a UE, such as processing FA service.

In the prior art IMS standards, the problem existed in realizing FA is that no status information representing user busyness is stored in network, thus it cannot be realized to determine directly that a user is busy. Generally, user busyness is determined by a terminal. When a user receives a new session request, if the user is in another session or processing other services, the user returns information of user busyness to the network. Thus, when the network knows that the user is busy, the session to other users may have been established, in this situation, the releasing of other branches needs to be taken into consideration. However, in prior art callings have not been established, so the releasing of the callings are not likely to take place. In addition, it is apparent from above description that the interaction for processing the busyness of a FA group with single-user type via HLR is extraordinary complex, thus resulting in low efficiency in the process. Such prior art documents are the standard 36PP2 publication: "MMD Supplementary Services Stage 2 - Replacement Flow for the Flexible Alerting Feature" by Nortel and the patent publication US 2004/180 654 A1.

### Invention Summary

The present invention is made considering above problem in the prior art, and provides a method for processing busyness of flexible alert (FA) group with single-user type, wherein AS not HLR processes busyness of FA group with single-user type.

The method for processing busyness of FA group with single-user type according to the present invention comprises: a caller dials a guiding number of Flexible Alert, FA, and the calling is connected to an application server, the application server acquires member numbers of the FA group based on the guiding number, and establishes the callings to each member in the FA group; when one member in the FA group returns a busyness message, if the FA is of the single-user type, the application server determines the FA group is busy; and the application server releases all the callings to the other members in the FA group, and returns FA group being busy to the caller.

Wherein, the process that the calling is connected to the application server further comprises: the calling is connected to the Serving-Call Session Control Function (S-CSCF) to which the guiding number belongs; and the S-CSCF forwards the session request to the application server which processes FA service according to a filter.

The process that the application server acquires member numbers of the FA group based on the guiding number, and establishes the callings to each member in the FA group further comprises: the application server judges the calling is a FA calling, and inquires a member list of the FA group, and acquires the member numbers of the FA group; and the application server sends calling request to all the members in the FA group via the S-CSCF and Proxy-Call Session Control Function (P-CSCF).

In particular, the application server can simultaneously send the calling request to all the members in the FA group.

In addition, the process that one member in the FA group returns a busyness message is: one member in the FA group returns the busyness message to the application server via the P-CSCF and the S-CSCF.

In the present invention, the processing of busyness of FA group with single-user type is achieved by means of AS, the interaction and the process flow are simplified, and the efficiency for processing the busyness of FA group with single-user type is increased, thus the user's experience is improved.

Other features and advantages of the present invention will be illustrated in the following specification, and partly apparent from the specification or appreciated through implementing the present invention. The purpose of the present invention and other advantages can be achieved through the structure specified in the specification, claims and drawings.

### Brief Description of the Drawings

The drawings provide a further understanding to the present invention and form a part of the specification, as well as explain the present invention together with the embodiments. However, the drawings do not limit the present invention, wherein,
Fig.1 is a schematic diagram showing the circuit domain frame of FA according to prior art;
Fig.2 is a flow chart showing the processing of single-user type busyness based on HLR according to prior art;
Fig.3 is a schematic diagram showing the reference frame of IMS of FA according to prior art;
Fig.4 is a flow chart showing the method for processing the busyness of single-user FA group according to the embodiment of the present invention; and
Fig.5 is a detailed flow chart showing an AS-based process example of the method of Fig.4.

### Detailed Description of Embodiments

The preferred embodiments of the present invention will be described in connection with the drawings. It shall be understood that the preferred embodiments described herein is provided for illustrating and explaining the present invention not for limiting the present invention.

According the embodiments of the present invention, a method for processing the busyness of FA group with single-user type is provided; the method is based on application server (AS).

Preferably, the present invention is implemented under the above-mentioned IMS architecture. As shown in Fig.3, P-CSCF is the session entrance point where a UE is accessed to the IMS network, and is responsible for forwarding the session between a UE and the network; S-CSCF is responsible for handling the session request from a UE and performing the initial filtering rule; AS is responsible for providing service of a UE/UEs, such as processing FA service.

Based on the aforesaid IMS architecture, as shown in Fig.4, the method for processing the busyness of FA group with single-user type comprises:
Step S402, a caller dials a guiding number of FA, and the calling is connected to an AS, the AS acquires member numbers of the FA group based on the guiding number, and establishes the callings to each member in the FA group; Step S404, when one member in the FA group returns a busyness message, if the FA is of the single-user type, the AS determines the FA group is busy; Step S406, the AS releases all the callings to the other members in the FA group, and returns FA group being busy to the caller.

Wherein, in Step S402, the process that the calling is connected to the AS further comprises: the calling is connected to the S-CSCF to which the guiding number belongs; and the S-CSCF forwards the session request to the AS which processes FA service according to a filter.

Further, in Step S402, the process that the AS acquires member numbers of the FA group based on the guiding number, and establishes the callings to each member in the FA group further comprises: the AS judges the calling is a FA calling, and inquires a member list of the FA group, and acquires the member numbers of the FA group; and the AS sends calling request to all the members in the FA group via the S-CSCF and P-CSCF. In particular, the AS can simultaneously send the calling request to all the members in the FA group.

Correspondingly, the process that one member in the FA group returns a busyness message is: one member in the FA group returns the busyness message to the AS via the P-CSCF and the S-CSCF.

The method for processing the busyness of FA group with single-user type according to the present invention will be described in connection with an example.

### Example

In the example, it is assumed that the FA group has two members UE1 and UE2, the caller is UE3, the FA group is of single-user type, the FA group is busy when one member in the FA group is busy, and the callings will be released.

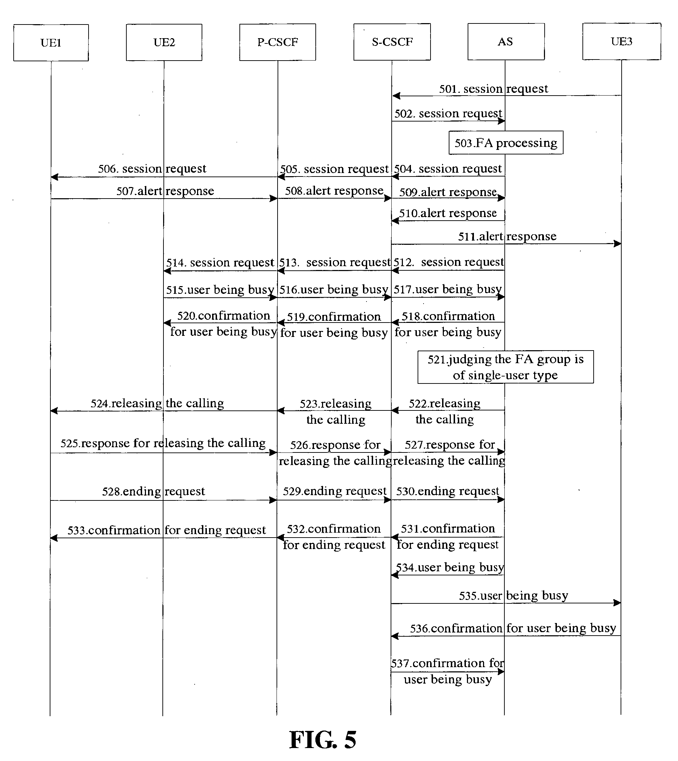

As shown in Fig.5, detailed processes are given hereafter:
Step 501-502, the caller UE3 initiating a calling by dialing the guiding number, the calling is connected to the S-CSCF to which the guiding number belongs, and the S-CSCF forwards the session request to the AS which processes FA service according to a filter;
Step 503-506, the AS judges the calling is a FA calling, inquires a member list of the FA group ,selects the first member UE1, and sends session request to UE1; the session request is forwarded to UE1 via S-CSCF and P-CSCF;
Step 507-511, UE1 receives the request and returns an alert response which will be returned along the initial path for the session and will be delivered to UE3;
Step 512-514, AS initiates a session request to the second member UE2 (the step can be simultaneously processed with Step 503-511);
Step 515-520, UE2 returns user being busy (a busyness message), the AS returns confirmation information for user being busy to UE2;
Step 521-527, if the FA group is of single-user type, the AS determines that the FA group is busy, and releases other ongoing calling branches;
Step 528-533, UE1 initiates ending request, the AS returns confirmation message.
Step 534-537, the AS returns message for user being busy to UE3, and the whole calling session is ended.

In the above example, although UE2 returns user being busy first, but it is also possible that UE1 returns user being busy first, the process only needs one of the users returns user being busy. In addition, although the above example is described in the instance that the FA group comprises 2 members, the present invention is applicable to the instance that the FA group comprising one or more members, in the process of which, when one member is busy, the AS releases the calling establishment to other members.

It is noted that the example of the present invention comprises only member user of the IMS, but the present invention is applicable to the circumstance that the FA group comprises other users, such as PSTN users, MSC users, etc..

Above description is to illustrate the preferred embodiments not limit the present invention. Various alterations and changes to the present invention are apparent to those skilled in the art. The scope defined in claims shall comprise any modification, equivalent substitution and improvement of the present invention.

## Claims

1. A method for processing the busyness of flexible alert group with single-user type comprising:
a caller dials a guiding number of Flexible Alert, FA, and the calling is connected to an application server, the said application server acquires member numbers of the FA group base on the said guiding number, and establishes the callings to each member in the said FA group (S402);
when one member in the said FA group returns a busyness message, if said FA is of the single-user type, the said application server determines the said FA group is busy (S404); and
the said application server releases all the callings to the other members in the said FA group, and returns FA group being busy to the said caller (S406).

2. The method for processing the busyness of flexible alert group with single-user type according to Claim 1 is **characterized in that**, the process that the said calling is connected to the said application server further comprises:
the calling is connected to the Serving-Call Session Control Function, S-CSCF, to which the guiding number belongs; and
the said S-CSCF forwards the session request to the said application server which processes FA service according to a filter.

3. The method for processing the busyness of flexible alert group with single-user type according to Claim 2 is **characterized in that**, the process that the said application server acquires member numbers of the FA group based on the said guiding number, and establishes the callings to each member in the said FA group further comprises:
the said application server judges the calling is a FA calling, and inquires a member list of the said FA group, and acquires the member numbers of the said FA group; and
the said application server sends calling request to all the members in the said FA group via the said S-CSCF and Proxy-Call Session Control Function, P-CSCF.

4. The method for processing the busyness of flexible alert group with single-user type according to Claim 3 is **characterized in that**, the said application server simultaneously sends the said calling request to all the members in the said FA group.

5. The method for processing the busyness of flexible alert group with single-user type according to Claim 3 is **characterized in that**, the process that one member in the said FA group returns a busyness message is:
one member in the said FA group returns the said busyness message to the said application server via the said P-CSCF and the said S-CSCF.

## Patentansprüche

1. Verfahren zur Verarbeitung von Gruppen-Belegt beim flexiblen Rufen im Einzelbenutzertyp, umfassend dass:
ein Anrufer eine Leitnummer der flexiblen Wachenalarmierung (engl. Flexible Alert, FA) wählt und der Anruf mit einem Anwendungsserver verbunden wird, wobei der Anwendungsserver Mitgliedsnummern der FA-Gruppe basierend auf der Leitnummer erlangt und die Anrufe an jedes Mitglied der FA-Gruppe herstellt (S402);
wenn ein Mitglied der FA-Gruppe eine Belegtnachricht zurückgibt, falls die FA vom Einzelbenutzertyp ist, der Anwendungsserver bestimmt, dass die FA-Gruppe belegt ist (S404); und
der Anwendungsserver alle Anrufe an die anderen Mitglieder der FA-Gruppe freigibt und an den Anrufer zurückgibt, dass die FA-Gruppe belegt ist (S406).

2. Verfahren zur Verarbeitung von Gruppen-Belegt beim flexiblen Rufen im Einzelbenutzertyp nach Anspruch 1, **dadurch gekennzeichnet, dass** das Verfahren, dass der Anruf mit dem Anwendungsserver verbunden wird, ferner umfasst, dass:
der Anruf mit der Funktion S-CSCF (engl; Serving-Call Session Control Function), der die Leitnummer angehört, verbunden wird; und
die S-CSCF die Sitzungsanfrage an den Anwendungsserver weiterleitet, der den FA-Dienst entsprechend einem Filter verarbeitet.

3. Verfahren zur Verarbeitung von Gruppen-Belegt beim flexiblen Rufen im Einzelbenutzertyp nach Anspruch 2 **dadurch gekennzeichnet, dass** das Verfahren, dass der Anwendungsserver Mitgliedsnummern der FA-Gruppe basierend auf der Leitnummer erlangt und die Anrufe an jedes Mitglied in der FA-Gruppe erstellt, ferner umfasst, dass:
der Anwendungsserver bestimmt, dass der Anruf ein FA-Anruf ist und eine Mitgliedsliste der FA-Gruppe anfordert und die Mitgliedsnummern der FA-Gruppe erlangt; und
der Anwendungsserver Anrufanfragen an alle Mitglieder in der FA-Gruppe über die Funktionen S-CSCF- und P-CSCF (engl; Proxy-Call Session Control Function) sendet.

4. Verfahren zur Verarbeitung von Gruppen-Belegt beim flexiblen Rufen im Einzelbenutzertyp nach Anspruch 3, **dadurch gekennzeichnet, dass** der Anwendungsserver gleichzeitig die Anrufanfrage an alle Mitglieder in der FA-Gruppe sendet.

5. Verfahren zur Verarbeitung von Gruppen-Belegt beim flexiblen Rufen im Einzelbenutzertyp nach Anspruch 3, **dadurch gekennzeichnet, dass** das Verfahren, dass ein Mitglied in der FA-Gruppe eine Belegtnachricht zurückgibt, darin besteht, dass:
ein Mitglied in der FA-Gruppe die Belegtnachricht an den Anwendungsserver über die Funktionen P-CSCF und S-CSCF zurückgibt.

## Revendications

1. Méthode pour traiter l'occupation de groupe d'alerte flexible avec un type d'utilisateur unique comprenant :
un appelant compose un numéro de guidage d'alerte flexible, FA, et l'appel est connecté à un serveur d'application, ledit serveur d'application acquiert des numéros de membre du groupe FA sur la base dudit numéro de guidage, et établit les appels à chaque membre dudit groupe FA (S402) ;
quand un membre dudit groupe FA renvoie un message d'occupation, si ledit FA est du type à utilisateur unique, ledit serveur d'application détermine que ledit groupe FA est occupé (S404) ; et
ledit serveur d'application libère tous les appels aux autres abonnés dudit groupe FA, et renvoie le groupe FA occupé audit appelant (S406).

2. Méthode pour traiter l'occupation de groupe d'alerte flexible avec un type d'utilisateur unique selon la revendication 1, **caractérisée en ce que** le procédé selon lequel ledit appel est connecté audit serveur d'application comprend en outre :
l'appel est connecté à la fonction de commande de session d'appel de service, S-CSCF, à laquelle appartient le numéro de guidage ; et
ladite S-CSCF. transmet la requête de session audit serveur d'application qui traite le service FA selon un filtre.

3. Méthode pour traiter l'occupation de groupe d'alerte flexible avec un type d'utilisateur unique selon la revendication 2, **caractérisée en ce que** le procédé selon lequel ledit serveur d'application acquiert des numéros de membre du groupe FA sur la base dudit numéro de guidage, et établit les appels à chaque membre dudit groupe FA comprend en outre :
ledit serveur d'application juge que l'appel est un appel FA, et interroge une liste de membres dudit groupe FA, et acquiert les numéros de membres dudit groupe FA ; et
ledit serveur d'application envoie une demande d'appel à tous les membres dudit groupe FA via ladite S-CSCF. et la fonction de commande de session d'appel de mandataire, P-CSCF.

4. Méthode pour traiter l'occupation de groupe d'alerte flexible avec un type d'utilisateur unique selon la revendication 3, **caractérisée en ce que** ledit serveur d'application envoie simultanément ladite demande d'appel à tous les membres dudit groupe FA.

5. Méthode pour traiter l'occupation de groupe d'alerte flexible avec un type d'utilisateur unique selon la revendication 3, **caractérisée en ce que** le processus selon lequel un membre dudit groupe FA renvoie un message d'occupation est :
un membre dudit groupe FA renvoie ledit message d'occupation audit serveur d'application via ladite P-CSCF et ladite S-CSCF.
